# EUROPEAN PATENT APPLICATION

(11) **EP 1 187 434 A2**
(43) Date of publication of application: **13.03.2002**
(21) Application number: 01121472.3
(22) Date of filing: 07.09.2001
(51) Int. Cl.: H04M 1/2745, H04M 1/725, H04M 1/57

(54) **Portable information terminal, communication method and recording medium**

(30) Priority: 07.09.2000 JP 2000272026
(71) Applicant: Matsushita Electric Industrial Co., Ltd., Kadoma-shi, Osaka (JP)
(72) Inventor: Kumagai, Hiroshi, Fukuroi-shi, Shizuoka 437-0023 (JP)
(74) Representative: Grünecker, Kinkeldey, Stockmair & Schwanhäusser Anwaltssozietät

(57) **Abstract**

Selection is made whether to store history information at the outgoing call or the incoming call into the storage (150) via the storage controller (134) based on the user's instruction via the input section (120) before or during communications. Next, history information at the outgoing call or history information at the incoming call is stored via the storage (150) based on the setting via the storage controller (134).

## Description

### Background of the Invention

The present invention relates to a portable information terminal, a communications method and a recording medium, and in particular to a portable information terminal, a communications method and a recording medium that save the user the work of deleting history information stored in storage unit after communications or an access and easily and securely protect private information such as communication history and access history.

In recent years, some portable information terminals such as a portable cellular phone store the time and date the user placed a call (hereinafter referred to as an outgoing call) or answered a call (hereinafter referred to as an incoming call), the telephone number and the name of the distant party, as an outgoing call history or an incoming call history, in the storage of the portable information terminals.

The outgoing call history and the incoming call history are stored as many as about 10 occurrences in memory. These outgoing call history and the incoming call history allow the user to call a target distant party with great ease when the user wishes to call a same party or call back a party, by activating the outgoing call history or the incoming call history stored in memory to select the history of the corresponding party and place a call.

In case the user wishes to keep secret the time and date/name of the distant party/telephone number of the distant party in the outgoing call history or the incoming call history, the user may perform a predetermined operation to delete the corresponding history.

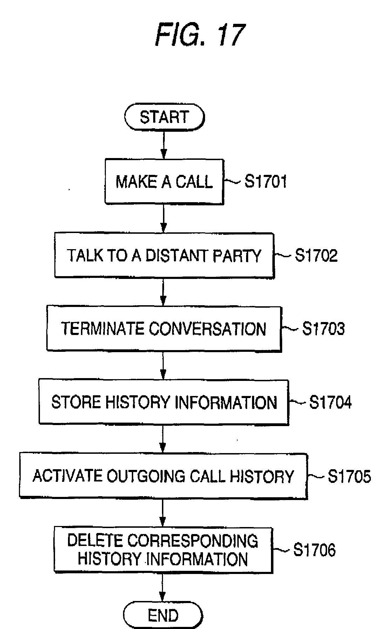

Next, processing of the outgoing call history and the incoming call history (hereinafter referred to as history information) in a related art portable information terminal will be described. Fig. 17 is a flowchart showing the processing of history information in a related art portable information terminal. In step S1701, the user enters the telephone number of the distant party, then presses the call start key to make a call. In step S1792, the user talks to the distant party. In step S1703, the user releases the call. When the call is released, the history information regarding the distant party (date and time of call made, name and telephone number) is stored in memory in step S1704. Processing in step S1704 is automatically made as one of the end procedures that take place at call release. In case the user wishes to delete the outgoing call history in memory later, the user activates outgoing call history in order to delete history information stored in memory from the outgoing call history, and deletes corresponding history information in the activated outgoing call history in step S1706. The foregoing operation also applies to a case where the user deletes corresponding history information in the activated incoming call history stored in memory during the terminal being in an idle state after the user released the call.

The aforementioned related art portable information terminal is disadvantageous in that the user may forget to delete history information to be deleted thus leaving the history information accessible to a thirdparty, because a predetermined period has elapsed since the end of communications due to an unexpected situation such as a sudden visitor following the communication and successive incoming calls.

Similarly, new incoming call history or outgoing call history is stored on top of the incoming call history or outgoing call history to be deleted thus resulting in the work of retrieving the history information to be deleted before deleting the history information, because a predetermined period has elapsed since the end of communications due to an unexpected situation such as successive incoming calls and outgoing calls.

A mobile terminal such as a portable cellular phone has been integrated as a portable information terminal where an e-mail function and a function to browse contents on the internet. Thus, same as the outgoing call history and the incoming call history, history information such as address history of the contents browsed on the internet and access history of file access may be left undeleted after use and left accessible to a third party.

### Summary of the Invention

The invention is in view of the aforementioned circumstances and aims at providing a portable information terminal, a communications method and a recording medium that save the user the work of deleting history information stored in storage unit after communications and prevent history information from being left undeleted in order to easily and securely protect private information in the communication history, by making a setting so as not to store history information before or during communications.

The invention further aims at providing a portable information terminal, a communications method and a recording medium that save the user the work of deleting history information stored in storage unit after an access and prevent history information from being left undeleted in order to easily and securely protect private information in the file access history, by making a setting so as not to store history information before or during an access.

In order to solve the problems, portable information terminal according to the first aspect of the invention is characterized in that the terminal comprises storage unit for storing history information and storage control unit for selecting whether to store history information at an outgoing call or history information at an incoming call into the storage unit based on the user's instruction via input unit before or during communications.

A portable information terminal according to the second aspect of the invention is a portable information terminal that allows browsing of the provided information stored in information provision apparatus connected via a network, characterized in that the terminal comprises storage unit for storing history information and storage control unit for selecting whether to store history information at browsing of provided information into the storage unit based on the user's instruction via input unit before or during communications.

A portable information terminal according to the third aspect of the invention is a portable information terminal that allows an access to file storage unit where various files are stored, characterized in that the terminal comprises storage unit for storing history information and storage control unit for selecting whether to store history information at an access into the storage unit based on the user's instruction via input unit before or during an access.

A portable information terminal according to the fourth aspect of the invention is a portable information terminal according to the first, second or third aspect of the invention, characterized in that the terminal comprises output unit for outputting the result of selection via the storage control unit.

A portable information terminal according to the fifth aspect of the invention comprises storage unit for storing history information and end procedure selection unit for selecting a first end procedure or a second end procedure based on the user's instruction via input unit, characterized in that the terminal ends processing without storing the history information into the storage unit when the first end procedure is selected, and ends processing while storing the history information into the storage unit when the second end procedure is selected.

A portable information terminal according to the sixth aspect of the invention is a portable information terminal that allows browsing of the provided information stored in information provision apparatus connected via a network, characterized in that the terminal comprises storage unit for storing history information and end procedure selection unit for selecting a first end procedure or a second end procedure based on the user's instruction via input unit, and that the terminal ends processing without storing the history information into the storage unit when the first end procedure is selected, and ends processing while storing the history information into the storage unit when the second end procedure is selected.

A portable information terminal according to the seventh aspect of the invention is a portable information terminal that allows an access to file storage unit where various files are stored, characterized in that the terminal comprises storage unit for storing history information and end procedure selection unit for selecting a first end procedure or a second end procedure based on the user's instruction via input unit, and that the terminal ends processing without storing the history information into the storage unit when the first end procedure is selected, and ends processing while storing the history information into the storage unit when the second end procedure is selected.

A portable information terminal according to the eighth aspect of the invention is a portable information terminal according to the fifth, sixth or seventh aspect of the invention, characterized in that the terminal comprises output unit for outputting the result of selection via the storage control unit.

A communications method according to the ninth aspect of the invention is characterized in that the method comprises a storing step of storing history information into storage unit and a storage control step of selecting whether to store history information at the outgoing call or history information at the incoming call into the storage unit based on the user's instruction via an input step before or during communications.

A communications method according to the tenth aspect of the invention is a portable information terminal that allows browsing of the provided information stored in information provision apparatus connected via a network, characterized in that the method comprises a storing step of storing history information and a storage control step of selecting whether to store history information at browsing of provided information into the storage unit based on the user's instruction via input unit before or during communications.

A communications method according to the eleventh aspect of the invention is a portable information terminal that allows an access to file storage unit where various files are stored, characterized in that the method comprises a storing step of storing history information and a storage control stop of selecting whether to store history information at an access into the storage unit based on the user' s instruction via input unit before or during an access.

A communications method according to the twelfth aspect of the invention is a communications method according to the ninth, tenth or eleventh aspect of the invention, characterized in that the method comprises an output step of outputting the result of selection via the storage control step.

A communications method according to the thirteenth aspect of the invention comprises a storing step of storing history information and an end procedure selecting step of selecting a first end procedure or a second end procedure based on the user's instruction via an input step, characterized in that the method ends processing without storing the history information into the storage unit when the first end procedure is selected, and ends processing while storing the history information into the storage unit when the second end procedure is selected.

A communications method according to the fourteenth aspect of the invention is a communications method for a portable information terminal that allows browsing of the provided information stored in information provision apparatus connected via a network, characterized in that the method comprises a storing step of storing history information and an end procedure selecting step of selecting a first end procedure or a second end procedure based on the user's instruction via an input step, and that the method ends processing without storing the history information into the storage unit when the first end procedure is selected, and ends processing while storing the history information into the storage unit when the second end procedure is selected.

A communications method according to the fifteenth aspect of the invention is communications method for a portable information terminal that allows an access to file storage unit where various files are stored, characterized in that the method comprises a storing step of storing history information and an end procedure selecting step of selecting a first end procedure or a second end procedure based on the user's instruction via an input step, and that the method ends processing without storing the history information into the storage unit when the first end procedure is selected, and ends processing while storing the history information into the storage unit when the second end procedure is selected.

A communications method according to the sixteenth aspect of the invention is a communications method according to the thirteenth, fourteenth or fifteenth aspect of the invention, characterized in that the method comprises an output step of outputting the result of selection via the storage control step.

A computer-readable recording medium according to the seventeenth aspect of the invention is characterized in that the medium records a communications method according to the ninth, tenth, eleventh, twelfth, thirteenth, fourteenth, fifteenth or sixteenth aspect of the invention as a program to be executed by a computer.

A portable information terminal according to the first or fourth aspect of the invention, a communications method according to the ninth or twelfth aspect of the invention, and a recording medium according to the sixteenth aspect of the invention select whether to store history information at an outgoing call or history information at an incoming call into storage unit via storage control unit (a storage control step) based on the user's instruction via input unit before or during communications. Next, the portable information terminal, communications method, and recording medium store history information at the outgoing call or history information at the incoming call via storage unit (a storing step) based on the setting via storage control unit (a storage control step).

In this way, setting is made on whether to store history information into storage unit via storage control unit (a storage control step) based on the user's instruction via input unit before or during communications . For example, in case the user wishes not to leave history information at the outgoing call or the incoming call, the user makes a setting so as not to store history information into storage unit before or during communications, in order to save the user the work of deleting history information stored in the storage unit which the user wishes to keep secret after communications are over.

It is possible to prevent history information to be kept secret from being left undeleted because a predetermined period has elapsed since the end of communications due to an unexpected situation such as a sudden visitor following the communication and successive incoming calls.

Similarly, it is possible to save the user the work of retrieving before deleting the corresponding history information in the history information stored in the storage unit in case other history information is stored into storage unit within a predetermined period after the end of communications.

A portable information terminal according to the second or fourth aspect of the invention, a communications method according to the tenth or twelfth aspect of the invention, and a recording medium according to the fifteenth aspect of the invention select whether to store history information at browsing of provided information into storage unit via storage control unit (a storage control step) based on the user's instruction via input unit before or during communications. Next, the portable information terminal, communications method, and recording medium store history information at browsing of provided information via storage unit (a storing step) based on the setting via storage control unit (a storage control step) .

In this way, setting is made on whether to store history information at browsing of provided information into storage unit via storage control unit (a storage control step) based on the user's instruction via input unit before or during communications. For example, in case the user wishes not to leave history information at browsing of provided information, the user makes a setting so as not to store history information into storage unit before or during communications, in order to save the user the work of deleting history information stored in the storage unit which the user wishes to keep secret after communications are over.

It is possible to prevent history information to be kept secret from being left undeleted because a predetermined period has elapsed since the end of communications due to an unexpected situation such as a sudden visitor following the communication.

Further, it is possible to save the user the work of retrieving before deleting the corresponding history information in the history information stored in the storage unit in case other history information is stored into storage unit because a predetermined period has elapsed after the end of communications and other provided information is browsed in the meantime.

A portable information terminal according to the third or fourth aspect of the invention, a communications method according to the eleventh or twelfth aspect of the invention, and a recording medium according to the fifteenth aspect of the invention select whether to store history information at an access into storage unit via storage control unit (a storage control step) based on the user's instruction via input unit before or during an access. Next, the portable information terminal, communications method, and recording medium store history information at an access via storage unit (a storing step) based on the setting via storage control unit (a storage control step).

In this way, setting is made on whether to store history information at a file into storage unit via storage control unit (a storage control step) based on the user's instruction via input unit before or during an access to a file stored in file storage unit. For example, in case the user wishes not to leave history information at a file access, the user makes a setting so as not to store history information into storage unit before or during a file access, in order to save the user the work of deleting history information stored in the storage unit which the user wishes to keep secret after the access.

It is possible to prevent history information to be kept secret from being left undeleted because a predetermined period has elapsed since the end of an access due to an unexpected situation such as a sudden visitor following the access.

Similarly, it is possible to save the user the work of retrieving before deleting the corresponding history information in the file history information stored in the storage unit in case history information at another file is stored into storage unit because an access is made to another file within a predetermined period after the end of an access.

In particular, a portable information terminal according to the fourth aspect of the invention, a communications method according to the twelfth aspect of the invention, and a recording medium according to the seventeenth aspect of the invention preferably output the selection result of storage control unit (a storage control step) via output unit (an output step) . An aspect of output is displaying via an image or a text on a display section that the storage control unit (storage control step) has selected not to store history information into storage unit, or notifying the selection via a warning tone, light, or vibration. With this configuration, the user can check the current selection result of the storage control unit (storage control step).

In particular, a portable information terminal according to the fifth or eighth aspect of the invention, a communications method according to the thirteenth or sixteenth aspect of the invention, and a recording medium according to the seventeenth aspect of the invention select a first end procedure or a second end procedure via end procedure selection unit (an end procedure selecting step) based on the user's instruction via input unit. Next, the portable information terminal, communications method, and recording medium end the processing without storing history information into the storage unit (in the storing step) when the first end procedure is selected, and ends processing while storing the history information into the storage unit (in the storing step) when the second end procedure is selected.

In particular, a portable information terminal according to the sixth or eighth aspect of the invention, a communications method according to the fourteenth or sixteenth aspect of the invention, and a recording medium according to the seventeenth aspect of the invention can browse provided information stored in information provision apparatus connected via a network and select a first end procedure or a second end procedure via end procedure selection unit (an endprocedure selectingstep) based on the user's instruction via input unit. Next, the portable information terminal, communications method, and recording medium end the processing without storing history information into the storage unit (in the storing step) when the first end procedure is selected, and ends processing while storing the history information into the storage unit (in the storing step) when the second end procedure is selected.

In this way, the portable information terminal, communications method, and recording medium end the processing without storing history information into the storage unit when the first end procedure is selected, and ends processing while storing the history information into the storage unit when the second end procedure is selected, via end procedure selection unit (an end procedure selecting step) . For example, in case the user wishes not to leave history information at the outgoing call or the incoming call or history information at browsing of provided information, the user selects the first end procedure at the end of communications to end the processing without storing history information into storage unit with a single action.

This saves the user the work of deleting history information stored in the storage unit which the user wishes to keep secret after communications are over.

In case the user wishes to store history information at a distant party into storage unit, the user selects the second end procedure to store the history information into the storage unit.

In particular, a portable information terminal according to the seventh or eighth aspect of the invention, a communications method according to the fifteenth or sixteenth aspect of the invention, and a recording medium according to the seventeenth aspect of the invention select a first end procedure or a second end procedure via end procedure selection unit (an end procedure selecting step) based on the user's instruction via input unit. Next, the portable information terminal, communications method, and recording medium end the processing without storing history information into the storage unit (in the storing step) when the first end procedure is selected, and ends processing while storing the history information into the storage unit (in the storing step) when the second end procedure is selected.

In this way, the portable information terminal, communications method, and recording medium end the processing without storing history information into the storage unit when the first end procedure is selected, and ends processing while storing the history information into the storage unit when the second end procedure is selected, via end procedure selection unit (an end procedure selecting step). For example, in case the user wishes not to leave history information at a file access, the user selects the first end procedure at the end of a file access to end the processing without storing history information into storage unit with a single action.

This saves the user the work of deleting history information stored in the storage unit which the user wishes to keep secret after a file access.

In case the user wishes to store history information at an access into storage unit, the user selects the second end procedure to store the history information into the storage unit.

In particular, a portable information terminal according to the eighth aspect of the invention, a communications method according to the sixteenth aspect of the invention, and a recording medium according to the seventeenth aspect of the invention preferably output the selection result of end procedure selection unit (an end procedure selecting step) via output unit (an output step) . An aspect of output is displaying via an image or a text on a display section that the end procedure selection unit (end procedure selecting step) has selected not to store history information into storage unit, or notifying the selection via a warning tone, light, or vibration. With this configuration, the user can check the current selection result of the end procedure selection unit (end procedure selecting step).

### Brief Description of the Drawings

Fig. 1 is a block diagram showing a portable information terminal according to the first embodiment of the invention;
Fig. 2A is an explanatory drawing illustrating a directory storage table stored in a predetermined area of the storage 150;
Fig. 2B is an explanatory drawing illustrating an incoming call history storage table stored in a predetermined area of the storage 150;
Fig. 2C is an explanatory drawing illustrating an outgoing call history storage table stored in a predetermined area of the storage 150;
Fig. 3 is a flowchart explaining the first example of the processing in a portable information terminal according to the embodiment;
Fig. 4 is a flowchart explaining the second example of the processing in a portable information terminal according to the embodiment;
Fig. 5 is a flowchart explaining the third example of the processing in a portable information terminal according to the embodiment;
Fig. 6 is a block diagram showing a portable information terminal according to the second embodiment of the invention;
Fig. 7 is a general block diagram of a communications system to which the portable information terminal according to this embodiment is applied;
Fig. 8 is an explanatory drawing illustrating a browsing history storage table stored in a predetermined area of the storage;
Fig. 9 is a flowchart explaining the first example of the processing in a portable information terminal according to the embodiment;
Fig. 10 is a flowchart explaining the second example of the processing in a portable information terminal according to the embodiment;
Fig. 11 is a flowchart explaining the third example of the processing in a portable information terminal according to the embodiment;
Fig. 12 is a block diagram showing a portable information terminal according to the third embodiment of the invention;
Fig. 13 is an explanatory drawing illustrating a file history storage table stored in a predetermined area of the storage;
Fig. 14 is a flowchart explaining the first example of the processing in a portable information terminal according to the third embodiment;
Fig. 15 is a flowchart explaining the second example of the processing in a portable information terminal according to the third embodiment;
Fig. 16 is a flowchart explaining the third example of the processing in a portable information terminal according to the third embodiment;
Fig. 17 is a flowchart showing the processing of history information in a conventional portable information terminal.

### Detailed Description of the Preferred Embodiment

Embodiments of a portable information terminal according to the invention will be detailed referring to drawings in the order of (First embodiment), (Second embodiment), (Third embodiment) and (Variation). While description of each embodiment covers details of the portable information terminal and communications method according to the invention, a recording medium according to the invention is a recording medium where a program to execute the communications method is recorded so that the corresponding description thereof is included in the description of the communications method.

### (First embodiment)

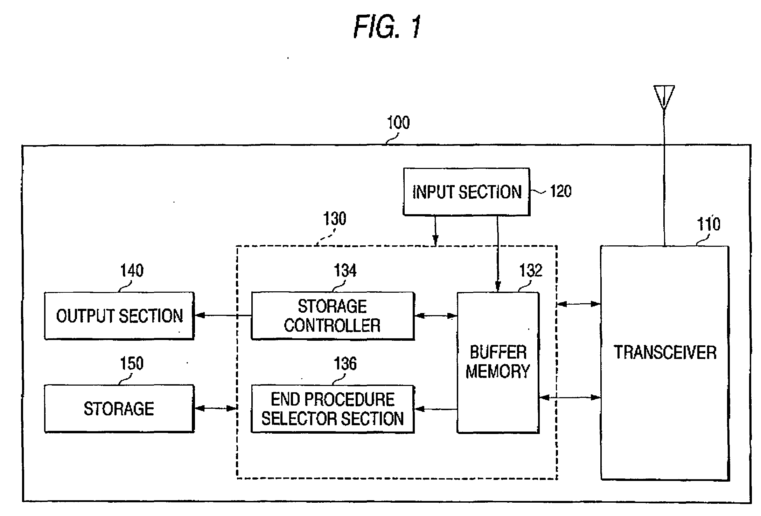

Fig. 1 is a block diagram showing a portable information terminal according to the first embodiment of the invention. The portable information terminal 100 of this embodiment comprises a transceiver 110 for performing voice/data transmission and reception, an input section 120 for accepting an instruction of the user, a controller 130 for controlling various functions of the portable information terminal 100, an output section 140 for outputting data based on the control in the controller 130, and a storage 150 for storing outgoing call history and incoming call history (hereinafter referred to as history information).

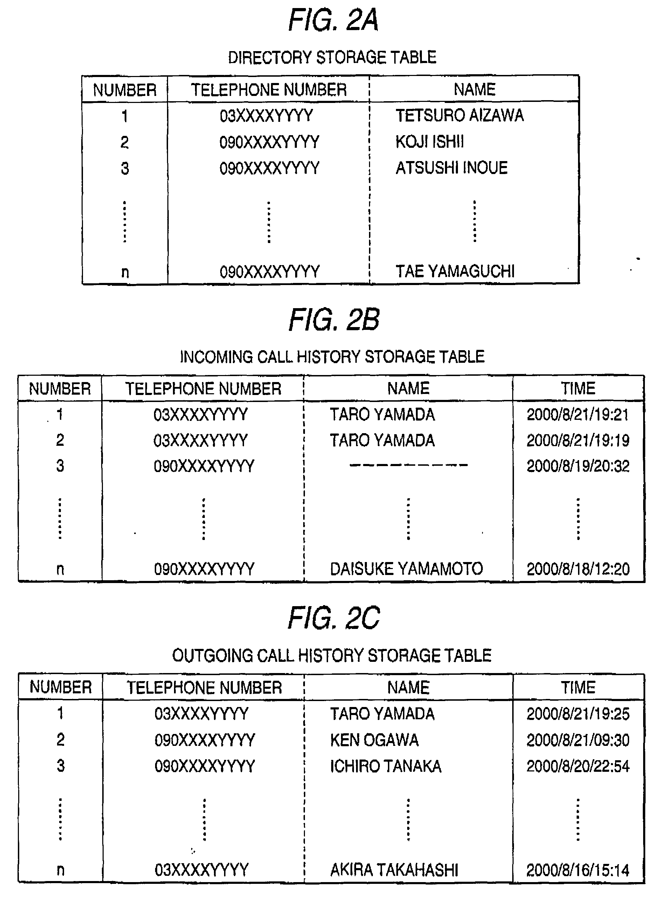

The storage 150 is implemented via for example volatile and non-volatile semiconductor memories such as RAM, ROM, EEPROM, and flash memory. In a predetermined area of the storage 150, a directory storage table, an outgoing call history storage table and an incoming call history storage table registered by the user are provided as shown in Fig. 2. Fig. 2A is an explanatory drawing illustrating a directory storage table stored in a predetermined area of the storage 150. Fig. 2B is an explanatory drawing illustrating a incoming call history storage table stored in a predetermined area of the storage 150. Fig. 2C is an explanatory drawing illustrating a call outgoing history storage table stored in a predetermined area of the storage 150.

As shown in Fig. 2A, the directory storage table can register more than several hundreds of telephone numbers which the user often dials, with corresponding names.

As shown in Fig. 2B, when the telephone number of a distant party is notified, at an incoming call, the telephone number and the time and date of call received are stored as an incming call history into the incoming call history storage table. In case the telephone number is registered to the directory storage table, the time and date of incoming call, telephone number and the corresponding name of the party are stored into the incoming call history storage table.

As shown in Fig. 2C, when a call is made by entering a telephone number on a keypad, the time and date of call made and the telephone number are stored as outgoing call history. In case a call is made by displaying the directory storage table and selecting a given telephone number, the time and date of outgoing call, the telephone number selected from the directory storage table and the corresponding name of the party are stored as outgoing call history into the outgoing call history storage table.

Data of the time and date of outgoing call or incoming call is determined by a clock feature in the portable information terminal.

The controller 130 is implemented via an MPU (microprocessor) and a DSP (digital signal processor). The controller 130 comprises at least a buffer memory 132 for temporarily saving history information at outgoing call and incoming call. The controller 130 further comprises a storage controller 134 for setting whether to store history information temporarily saved in the buffer memory 132 into the outgoing call history storage table or the incoming call history storage table shown in Fig. 2 and an end procedure selector section 136 for selecting as a procedure to end the processing whether to end the processing while storing history information temporarily saved in the buffer memory 132 into the storage 150, as features implemented by processing programs. The input section 120 is implemented via a ten-key pad, scroll keys and a microphone. The output section 140 is implemented for example via an LCD display panel and a loudspeaker.

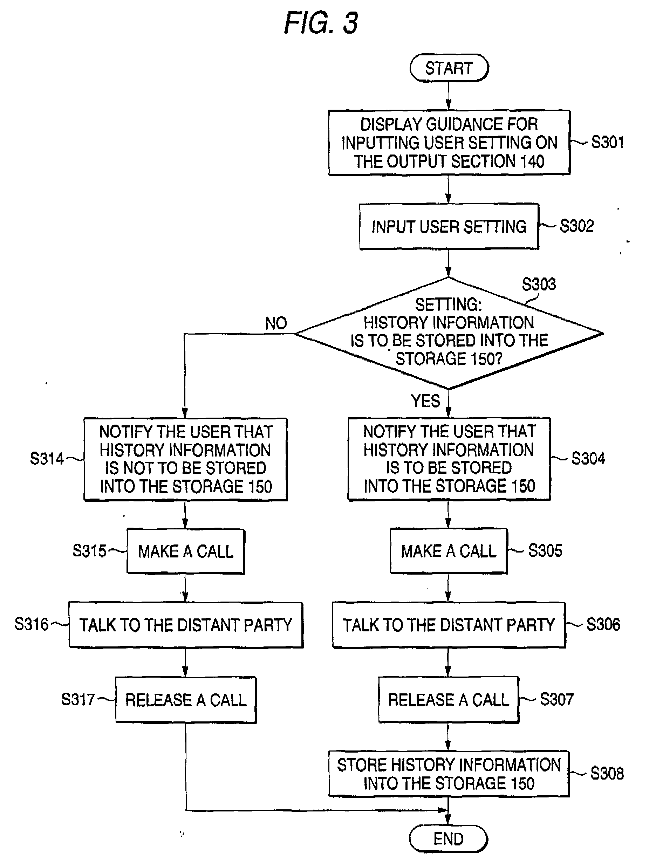

Processing in a portable information terminal according to the embodiments as comprising the aforementioned configuration will be detailed referring to Fig. 3, Fig. 4 and Fig. 5 respectively in the order of (First example), (Second example) and (Third example).

### (First example)

The first example of the processing in a portable information terminal according to the embodiment will be described referring to Fig. 3. In this example, the user sets whether to store history information into the storage 150 and history information is stored into the storage 150 via the storage controller 134 only when setting is made to store history information. Fig. 3 is a flowchart explaining the first example of the processing in a portable information terminal according to the embodiment.

In steps S301 and S302, to set whether to store history information temporarily saved in the buffer memory 132 at outgoing call into the outgoing call history storage table of the storage 150, the user enters an instruction to the storage controller 134 of the controller 130 via the input section 120 before making a call. More particularly, a message such as "Do you wish to store history information?", "#1: Yes", and "#2: No" is displayed as a guidance on the LCD display panel of the output section 140 to prompt an input from the user, for example during the terminal is in a wait state. The user presses an appropriate key ("#1" or "#2") in accordance with this guidance message to make proper setting.

Next, in case setting is made to store the history information of a distant party at a wait state in decision step 5303, execution proceeds to step S304. In step S304, the user is notified via the output section 140 that setting is made to store the history information of a distant party into the storage 150. User notification via the output section 140 uses an image or a text on an LCD display panel, a warning tone via a loudspeaker, a light via an LED or laser diode, or vibration via a motor. This allows checkup of whether the user currently selects to store history information. In step S305, the user enters a telephone number via keys to start a call or summons a directory storage table to select a desired telephone number to make a call, then conversation is started in step S306. In this practice, the data including the telephone number, name of the distant party and time and date is stored in the buffer memory 132. The telephone number is entered using keys or selected from the directory, the name is registered to a corresponding telephone number so that the name remains blank when the corresponding name is not found. The date of time and date is obtained by a clock feature owned by the portable information terminal. The call is released in step S307, then the history information of the distant party temporarily saved in the buffer memory 132 is stored in the outgoing call history storage table of the storage 150 in step S308.

Next, in case setting is made not to store the history information of a distant party in decision step S303, execution proceeds to step S314. In step S314, the user is notified via the output section 140 that setting is made not to store the history information of a distant party in the storage 150. In step S315, the user enters a telephone number via keys to start a call or summons a directory storage table to select a desired telephone number to make a call. Next, in step S316, talk to the distant party is started. In step S317, the call is released without transferring the contents of the buffer memory 132 to the storage 150, so that the history information is not stored into the storage 150.

While only outgoing call is described in this example, the same process applies to incoming call as well. That is, in case a selection is made similar to that in steps S301 and S302 while the terminal is in a wait state, a user notification similar to that in step S303, S304 or S314 is made, then the data including the telephone number of the distant party and time and date is written into the buffermemory 132 for an incoming call. In case the telephone number notified is registered to the directory storage table, the telephone number and the name are temporarily saved as history information into the buffer memory 132. In case setting is made to store history information, history information temporarily saved in the buffer memory 132 is stored into the incoming call history storage table of the storage 150, same as step S308.

### (Second example)

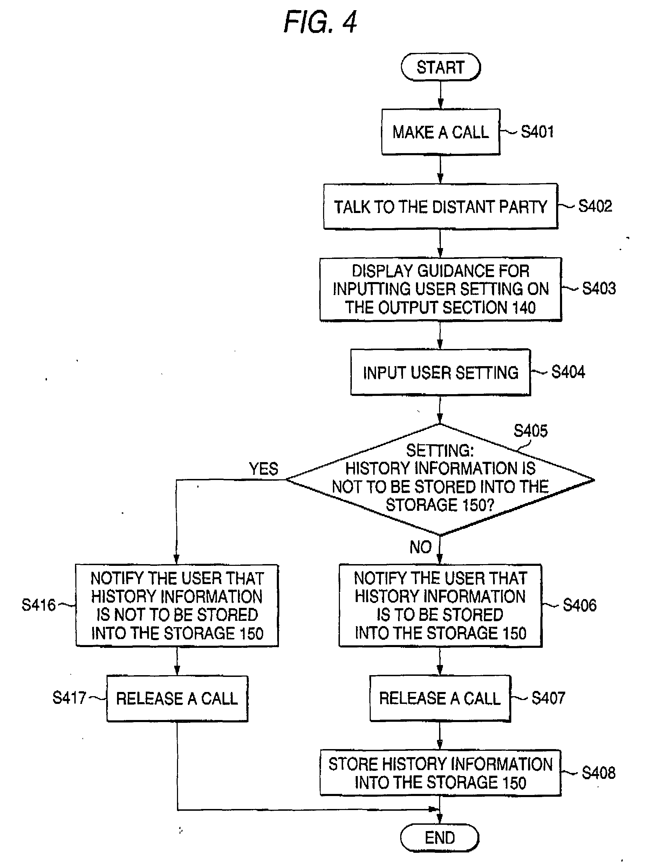

The second example of the processing in a portable information terminal according to the embodiment will be described referring to Fig. 4. In this example, the user sets whether to store history information into the storage 150 and history information is stored into the storage 150 via the storage controller 134 only when setting is made to store history information. Fig. 4 is a flowchart explaining the second example of the processing in a portable information terminal according to the embodiment.

In step S401, the user enters a telephone number via keys to make a call or summons a directory storage table to select a desired telephone number to make a call, then conversation is started in step S402. In this practice, the data including the telephone number, name of the distant party and time and date is stored in the buffer memory 132, same as the first example. In steps S403 and S404, to set whether to store history information temporarily saved in the buffer memory 132 at outgoing call into the outgoing call history storage table of the storage 150, the user enters an instruction to the storage controller 134 of the controller 130 via the input section 120. More particularly, a message such as "Do you wish to store history information?", "#1: Yes", and "#2: No" is displayed as a guidance on the LCD panel of the output section 140 to prompt an input from the user, for example while the user is in conversation. The user presses an appropriate key ("#1" or "#2") in accordance with this guidance message to make proper setting.

Next, in case setting is made to store the history information of a distant party during conversation in decision step S405, execution proceeds to step S406. In step S406, the user is notified via the output section 140 that setting is made to store the history information of a distant party into the storage 150. Same as the first example, user notification via the output section 140 uses an image on an LCD display panel, a warning tone via a loudspeaker, a light via an LED or laser diode, or vibration via a motor. The call is released in step S407, then the history information of the distant party temporarily saved in the buffer memory 132 is stored in the outgoing call history storage table of the storage 150 in step S408.

Next, in case setting is made not to store the history information of a distant party in decision step S405, execution proceeds to step S416. In step S416, the user is notified via the output section 140 that setting is made not to store the history information of a distant party in the storage 150. In step S417, the call is released without transferring the contents of the buffer memory 132 to the storage 150, so that the history information is not stored into the storage 150.

While only outgoing call is described in this example, the same process applies to incoming call as well. That is, in case a selection is made similar to that in steps S403 and S404 while the user is in conversation with the distant party of an incoming call, a user notification similar to that in step S405, S406 or S416 is made. In case setting is made to store history information at an incoming call, history information temporarily saved in the buffer memory 132 is stored into the incoming call history storage table of the storage 150, same as step S408.

As described earlier, according to a portable information terminal and the first example and the second example of a communications method of this embodiment, selection is made whether to store history information at an outgoing call or an incoming call into the storage 150 via the storage controller 134 (storage control step) based on the user's instruction via the input section 120 before or during communications. Next, the portable information terminal and the communications method store history information at an outgoing call or history information at incoming call via the storage 150 (storing step) based on the setting via the storage controller 134 (storage control step).

In this way, by making a setting so as not to store history information in the storage 150 before or during communications, it is possible to save the user the work of deleting history information the user wishes to keep secret after communications are over.

It is also possible to prevent history information to be kept secret from being left undeleted because a predetermined period has elapsed since the end of communications due to an unexpected situation such as a sudden visitor following the communication and successive incoming calls.

Similarly, it is possible to save the user the work of retrieving before deleting the corresponding history information in the history information stored in the storage 150 in case other history information is stored into the storage 150 within a predetermined period after the end of communications.

In case the user deletes history information stored in the storage which the user wishes to keep secret after communications are over, the third party may assume that the data has been deleted. By using a setting whereby history information is not stored into the storage 150 before or during communications, the third party cannot assume that the data has been deleted.

### (Third example)

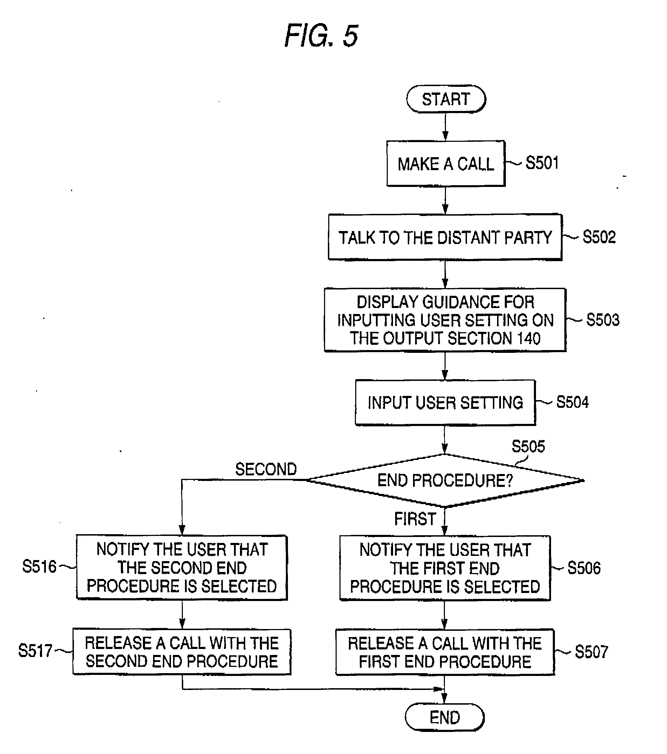

The third example of the processing in a portable information terminal according to the embodiment will be described referring to Fig. 5. In this example, the user selects and sets an end procedure and history information is stored into the storage 150 via the end procedure selector section 136 only when the second end procedure for ending the processing while storing history information is selected. Fig. 5 is a flowchart explaining the third example of the processing in a portable information terminal according to the embodiment.

In step S501, the user enters a telephone number via keys to make a call or summons a directory storage table to select a desired telephone number to make a call, then conversation is started in step S502. In this practice, the data including the telephone number, name of the distant party and time and date is stored in the buffer memory 132, same as the first example. In steps S503 and S504, to select the first end procedure for ending the processing without storing the history information of the distant party or the second end procedure for ending the processing while storing the history information of the distant party, the user enters an instruction to the end procedure selector section 136 of the controller 130 via the input section 120 at the end of communications. More particularly, a message such as "Do you wish to end the processing with the first end procedure or second end procedure?", "#+End key: First end procedure", and "End key: Second end procedure" is displayed as a guidance on the LCD display panel of the output section 140 to prompt an input from the user. The user presses an appropriate key ("#+End key" or "End key") in accordance with this guidance message to make proper setting.

Next, in case the first end procedure for ending the processing without storing the history information of a distant party is selected at the end of a call in decision step S505, execution proceeds to step S506. In step S506, the user is notified via the output section 140 that the first end procedure is selected. User notification via the output section 140 is the same as that in the first example. Via such a user notification, it is possible to check which of the first end procedure or second end procedure the user currently selects. Then, in step S507, the call is released with the first end procedure for ending the processing without transferring the history information of the distant party temporarily saved in the buffer memory 132 to the outgoing call history storage table of the storage 150. As a result, procedure ends without storing the history information into the storage 150.

Next, in case the second end procedure for ending the processing while storing the history information of a distant party is selected at the end of a call in decision step S505, execution proceeds to step S516. In step S516, the user is notified via the output section 140 that the second end procedure is selected. Then, in step S517, the processing is ended with the second end procedure for ending the processing while storing the history information of the distant party temporarily saved in the buffer memory 132 into the outgoing call history storage table of the storage 150.

While only an outgoing call is described in this example, the same process applies to a incoming call as well. That is, in case a selection is made similar to that in steps S503 and S504 when there is an incoming call, a user notification similar to that in step S505, S506 or S516 is made. In case the second end procedure is selected, history information temporarily saved in the buffer memory 132 is stored into the incoming call history storage table of the storage 150, same as step S517.

While this example covers only the case where the user selects the first end procedure or second end procedure when the call is released, the user may select the first end procedure or second end procedure by pressing defined key(s) other than the End key before or during communications.

As described earlier, according to a portable information terminal and the third example of a communications method of this embodiment, the first end procedure or second end procedure is selected via the end procedure selector section 136 (end procedure selecting step) based on the user's instruction via the input section 120. Next, the portable information terminal and the communications method end the processing without storing history information into the storage 150 (in storing step) when the first end procedure is selected, and end the processing while storing history information into the storage 150 (in storing step) when the second end procedure is selected.

Via this configuration, it is possible to end the processing without storing history information into the storage 150 with a single action, by selecting the first end procedure when communications are over.

It is also possible to save the user the work of deleting history information stored in the storage 150 which the user wishes to keep secret after communications are over.

In case the user wishes to store the history information of a distant party into the storage 150, the user may select the second end procedure after communications are over to attain the object.

### (Second embodiment)

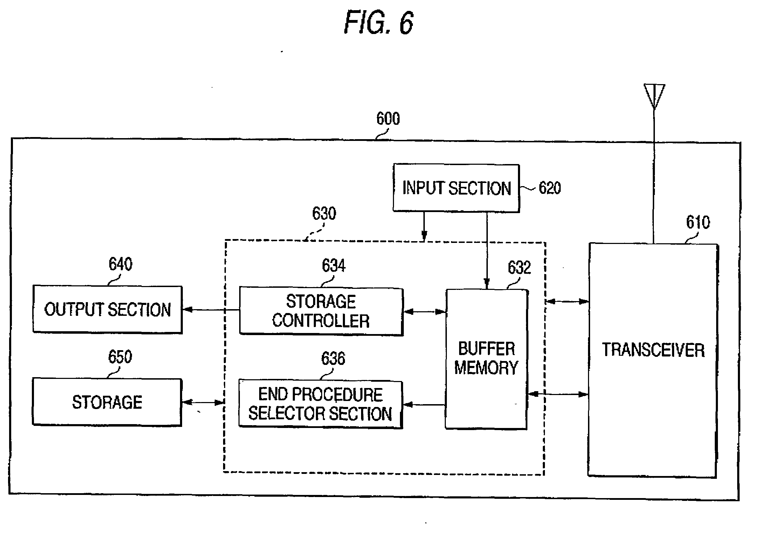

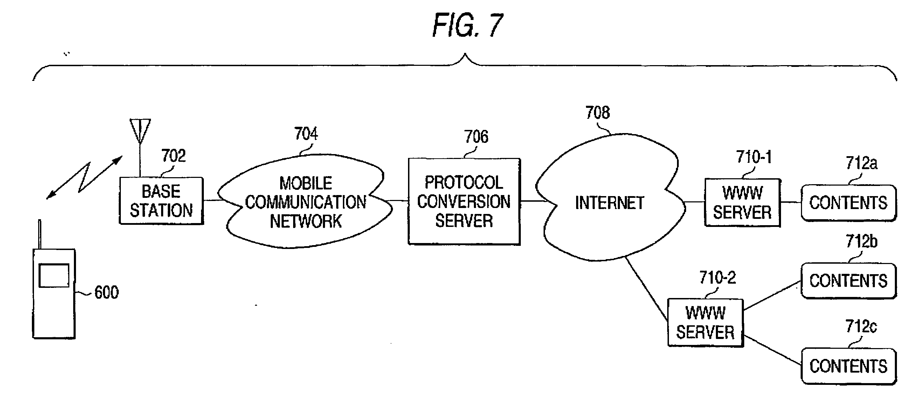

Fig. 6 is a block diagram showing a portable information terminal according to the second embodiment of the invention. The portable information terminal 600 in Fig. 6 is applicable to a communications system shown in Fig. 7. The portable information terminal 600 according to this embodiment acquires provided information (such as contents 712a) owned by information provision apparatus (such as WWW server 701-1) connected via a network by specifying address information to identify such information. Fig. 7 is a general block diagram of a communications system to which the portable information terminal according to this embodiment is applied.

A communications system to which a portable information terminal 600 according to this embodiment is applied will be outlined referring to Fig. 7. The communications system in Fig. 7 implements a contents provision system. The portable information terminal 600 is connected to a mobile communication network 704 via a base station 702 and allows communications with other portable information terminals and access to contents accumulated on a dedicated server on a mobile communications network (not shown).

The mobile communication network 704 is connected to the internet 708 via a protocol conversion server 706. To the internet 708 are connected www servers 710-1, 710-2. The portable information terminal 600 can access the contents 712a accumulated on the WWW server 710-1 on the internet via the protocol conversion server 706 and the WWW server 710-1.

Thus, the portable information terminal according to this embodiment incorporates browsing software (browser) can be used to browse contents on the internet, as well as a apparatus for making calls.

The form of a communications system to which the portable information terminal according to the embodiment is not limited to that in Fig. 7. For example, the network may correspond to the mobile communication network 704 and the information provision apparatus may correspond to the dedicated server on the mobile network 704 not shown in Fig. 7.

Next, the configuration of the portable information terminal 600 according to this embodiment will be described referring to Fig. 6. In Fig. 6, the portable information terminal 600 according to this embodiment comprises a transceiver 610 for performing voice/data transmission and reception, an input section 620 for accepting an instruction of the user, a controller 630 for controlling various features of the portable information terminal 600, an output section 640 for outputting data based on the control in the controller 630, and a storage 650 for storing browsing history (corresponding to history information in the aspects of the invention) obtained when a contents on the internet is opened.

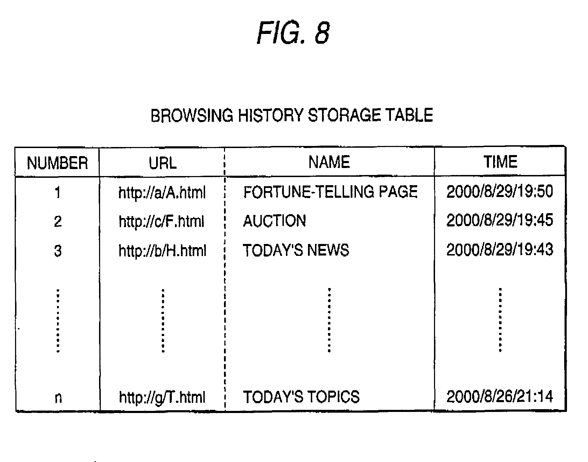

The storage 650 is implemented via for example volatile and non-volatile semiconductor memories such as RAM, ROM, EEPROM, and flash memory. In a predetermined area of the storage 650 is stored a browsing history storage table as shown in Fig. 8. Fig. 8 is an explanatory drawing illustrating a browsing history storage table stored in a predetermined area of the storage 650.

AS shown in Fig. 8, when address information represented by an address notation such as a URL (Uniform Resource Locator) to uniquely identify contents and the same assigned to the contents are reported to the portable information terminal 600 while the contents on the internet is being browsed, the address information on the contents and the name thereof are stored into a browsing history storage table. Data of the time and date of browsing is determined by a clock feature in the portable information terminal 600.

The controller 630 is implemented via a MPU (microprocessor) and DSP (digital signal processor). The controller 630 comprises at least a buffer memory 632 for temporarily saving browsing history at browsing. The controller 630 further comprises a storage controller 634 for setting whether to store browsing history temporarily saved in the buffer memory 632 into the browsing history storage table shown in Fig. 8 and an end procedure selector section 636 for selecting whether to end the processing while storing browsing history temporarily saved in the buffer memory 632 into the storage 650, as features implemented by processing programs. The input section 620 is implemented via a ten-key pad, scroll keys and a microphone. The output section 640 is implemented for example via an LCD display panel and a loudspeaker.

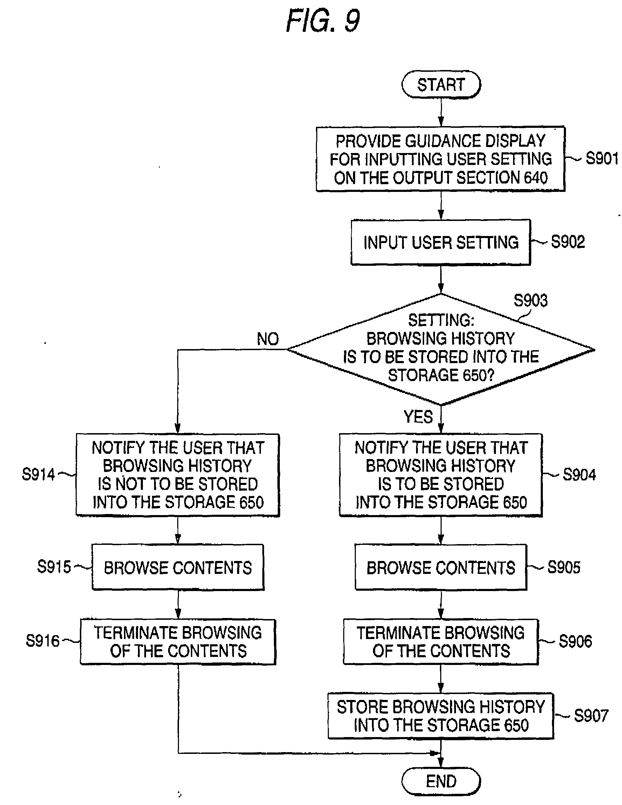

Processing in a portable information terminal according to the embodiments as comprising the aforementioned configuration will be detailed referring to Fig. 9, Fig. 10 and Fig. 11 respectively in the order of (First example), (Second example) and (Third example).

### (First example)

The first example of the processing in a portable information terminal according to the embodiment will be described referring to Fig. 9. In this example, the user sets whether to store browsing history into the storage 650 and browsing history is stored into the storage 650 via the storage controller 634 only when setting is made to store browsing history. Fig. 9 is a flowchart explaining the first example of the processing in a portable information terminal according to the embodiment.

In steps S901 and S902, to set whether to store browsing history temporarily saved in the buffer memory 632 at browsing of contents on the internet into the browsing history storage table of the storage 650, the user enters an instruction to the storage controller 634 of the controller 630 via the input section 620 before accessing the contents . More particularly, a message such as "Do you wish to store browsing history?", "#1; Yes", and "#2: No" is displayed as a guidance on the LCD display panel of the output section 640 to prompt an input from the user, for example before accessing the contents. The user presses an appropriate key ("#1" or "#2") in accordance with this guidance message to make proper setting.

Next, in case setting is made to store the browsing history of contents on the internet before an access in decision step S903, execution proceeds to step S904. In step S904, the user is notified via the output section 640 that setting is made to store the browsing history of the contents into the storage 650. User notification via the output section 640 uses an image or a text on an LCD panel, a warning tone via a loudspeaker, a light via an LED or laser diode, or vibration via a motor. This allows checkup of whether the user currently selects to store the browsing history of contents. In step S905, the user displays a menu screen via keys on an LCD panel, selects desired contents on the internet and starts an access to browse the contents on the internet. In this practice, the data including the URL, title of the contents and time and date of browsing is temporarily saved in the buffer memory 632. The URL is address information to uniquely identify the contents on the internet. The title is assigned by the contents creator. The date of time and date is obtained by a clock feature owned by the portable information terminal. Browsing of the contents is terminated in step S306, then the browsing history of the contents temporarily saved in the buffer memory 632 is stored in the browsing history storage table of the storage 650 in step S907.

Next, in case setting is made not to store the browsing history of contents on the internet before an access in decision step S903, execution proceeds to step S914. In step S914, the user is notified via the output section 640 that setting is made not to store the browsing history of the contents into the storage 650. In step S915, the user displays a menu screen via keys on an LCD display panel, selects desired contents on the internet and starts an access to browse the contents on the internet. In this practice, the data including the URL, name of the contents and time and date of browsing is temporarily saved in the buffer memory 632. Browsing of the contents is terminated in step S916, but the contents of the buffer memory 632 are not transferred to the storage 650 so that the browsing history is not stored into the storage 650.

### (Second example)

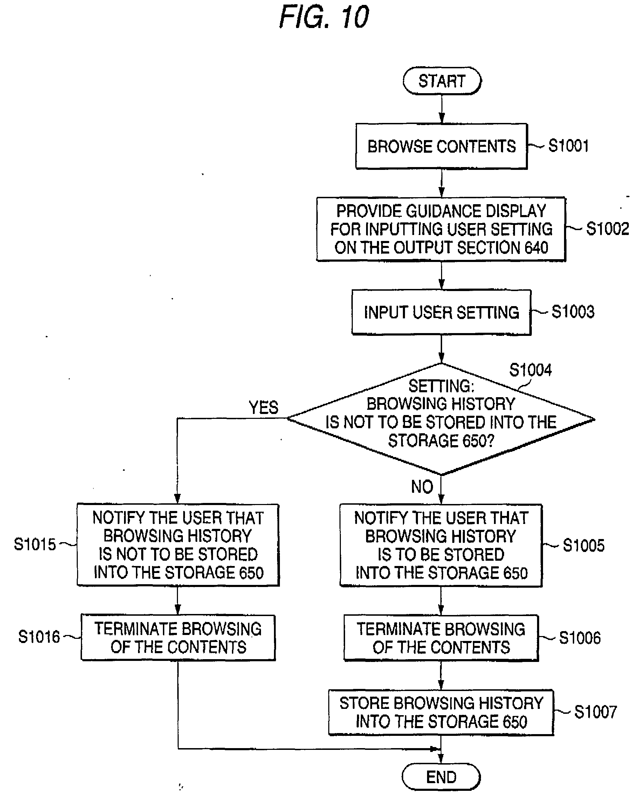

The second example of the processing in a portable information terminal according to the embodiment will be described referring to Fig. 10. In this example, the user sets whether to store browsing history into the storage 650 and browsing history is stored into the storage 650 via the storage controller 634 only when setting is made to store browsing history. Fig. 10 is a flowchart explaining the second example of the processing in a portable information terminal according to the embodiment.

In step S1001, the user displays a menu screen via keys on an LCD panel, selects desired contents on the internet and starts an access to browse the contents on the internet. Same as the first example, the data including the URL, name of the contents and time and date of browsing is temporarily saved in the buffer memory 632. In steps S1002 and S1003, to set whether to store browsing history temporarily saved in the buffer memory 632 at browsing of contents on the internet into the browsing history storage table of the storage 650, the user enters an instruction to the storage controller 634 of the controller 630 via the input section 620 for example while accessing the contents. More particularly, a message such as "Do you wish to store browsing history?", "#1: Yes", and "#2: No" is displayed as a guidance on the LCD panel of the output section 640 to prompt an input from the user, for example before accessing the contents. The user presses an appropriate key ("#1" or "#2") in accordance with this guidance message to make proper setting.

Next, in case setting is made to store the browsing history of contents on the internet before an access in decision step S1004, execution proceeds to step S1005. In step S1005, the user is notified via the output section 640 that setting is made to store the browsing history of the contents on the internet into the storage 650. Same as the first example, user notification uses an image on an LCD panel, a warning tone via a loudspeaker, a light via an LED or laser diode, or vibration via a motor. Browsing of the contents is terminated in step S1006, then the browsing history of the contents temporarily saved in the buffer memory 632 is stored in the browsing history storage table of the storage 650 in step S1007.

Next, in case setting is made not to store the browsing history of contents on the internet in decision step S1005, execution proceeds to step S1015. In step S1015, the user is notified via the output section 640 that setting is made not to store the browsing history of the contents into the storage 650. Browsing of the contents is terminated in step S1016, but the contents of the buffer memory 632 are not transferred to the storage 650 so that the browsing history is not stored into the storage 650.

In step S906 of the first example and step S1006 of the second example, completion of browsing of contents may be not only terminating browsing software in order to terminate an access to the contents but also terminating browsing of original contents before jumping from certain contents to other contents . In this case, the browsing history of the contents browsed immediately before jumping to other contents is sequentially stored into the browsing history storage table.

As described earlier, according to a portable information terminal and the first example and the second example of a communications method of this embodiment, selection is made whether to store browsing history of contents into the storage 650 via the storage controller 634 (storage control step) based on the user's instruction via the input section 160 before or during browsing of the contents on the internet. Next, the portable information terminal and the communications method store browsing history of the contents via the storage 650 (storing step) based on the setting via the storage controller 634 (storage control step).

In this way, by making a setting so as not to store browsing history of contents in the storage 650 before or during browsing of the contents on the internet, it is possible to save the user the work of deleting browsing history of contents the user wishes to keep secret after browsing of the contents.

It is also possible to prevent browsing history to be kept secret from being left undeleted because a predetermined period has elapsed since the end of browsing due to an unexpected situation such as a sudden visitor following completion of browsing.

Similarly, it is possible to save the user the work of retrieving before deleting the corresponding browsing history in the browsing history stored in the storage unit in case other contents browsed are stored into the storage 650 within a predetermined period after the end of communications.

In case the user deletes browsing history stored in the storage which the user wishes to keep secret after completion of browsing of contents on the internet, the third party may assume that the data has been deleted. By using a setting whereby browsing history is not stored into the storage 650 before or during browsing of contents, the third party cannot assume that the data has been deleted.

### (Third example)

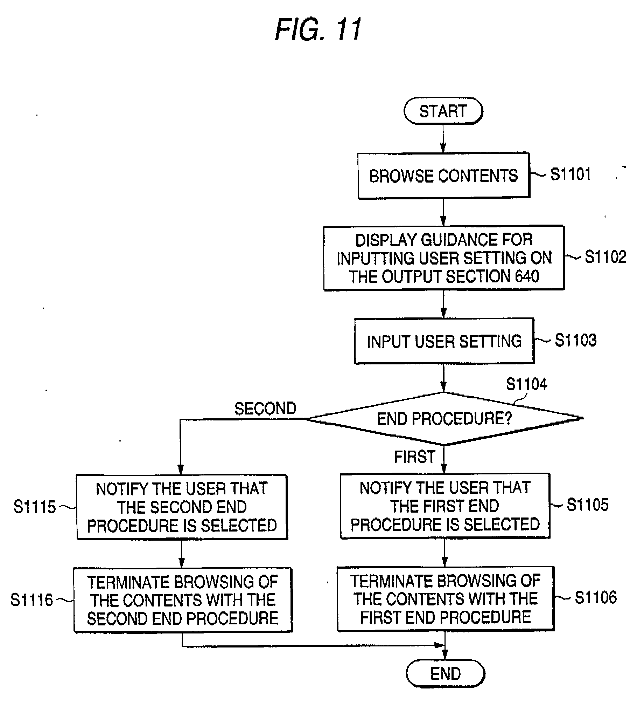

The third example of the processing in a portable information terminal according to the embodiment will be described referring to Fig. 11. In this example, the user selects and sets an end procedure and history information is stored into the storage 650 via the end procedure selector section 636 only when the second end procedure for ending the processing while storing browsing history is selected. Fig. 11 is a flowchart explaining the third example of the processing in a portable information terminal according to the embodiment.

In step S1101, the user displays a menu screen via keys on an LCD panel, selects desired contents on the internet and starts an access to browse the contents on the internet. In this practice, same as the first example, the data including the URL, title of the contents and time and date of browsing is temporarily saved in the buffer memory 632. In steps S1102, S1103, to select the first end procedure for ending the processing without storing the browsing history of the contents on the internet or the second end procedure for ending the processing while storing the browsing history of the contents on the internet as an end procedure, the user enters an instruction to the end procedure selector section 636 of the controller 630 via the input section 620 when browsing of the contents is terminated. More particularly, a message such as "Do you wish to end the processing with the first end procedure or second end procedure?", "#+End key: First end procedure", and "End key: Second end procedure" is displayed as a guidance on the LCD display panel of the output section 640 to prompt an input from the user. The user presses an appropriate key ("#+End key" or "End key") in accordance with this guidance message to make proper setting.

Next, in case the first end procedure for terminating browsing of contents without storing the browsing history of the contents is selected at completion of browsing of contents in decision step S1104, execution proceeds to step S1105. In step S1105, the user is notified via the output section 640 that the first end procedure is selected. User notification via the output section 640 is the same as that in the first example. Via such a user notification, it is possible to check which of the first end procedure or second end procedure the user currently selects. Then, in step S1106, browsing of the contents is terminated with the first end procedure for ending the processing without transferring the browsing history of the contents temporarily saved in the buffer memory 632 to the browsing history storage table of the storage 650. As a result, procedure ends without storing the browsing history of the contents into the storage 650.

Next, in case the second end procedure for terminating browsing of contents while storing the browsing history of the contents is selected at completion of browsing of contents in decision step S1104, execution proceeds to step S1115. Instep S1115, the user is notified via the output section 640 that the second end procedure is selected. Then, in step S1116, browsing of the contents is terminated with the second end procedure for ending the processing while storing the browsing history of the contents temporarily saved in the buffer memory 632 into the browsing history storage table of the storage 650.

While this example covers only the case where the user selects the first end procedure or second end procedure when browsing of contents on the internet is terminated, the user may select the first end procedure or second end procedure by pressing defined key(s) other than the End key before or during browsing of contents.

As described earlier, according to a portable information terminal and the third example of a communications method of this embodiment, the first end procedure or second end procedure is selected via the end procedure selector section 636 (end procedure selecting step) based on the user's instruction via the input section 620. Next, the portable information terminal and the communications method end the processing without storing browsing history into the storage 650 (in storing step) when the first end procedure is selected, and end the processing while storing browsing history into the storage 650 (in storing step) when the second end procedure is selected.

Via this configuration, it is possible to end the processing without storing browsing history into the storage 650 with a single action, by selecting the first end procedure when browsing of contents is terminated.

It is also possible to save the user the work of deleting browsing history stored in the storage 650 which the user wishes to keep secret after browsing of contents is terminated.

In case the user wishes to store the browsing history of contents into the storage 650, the user may select the second end procedure after browsing of contents is terminated to attain the object.

### (Third embodiment)

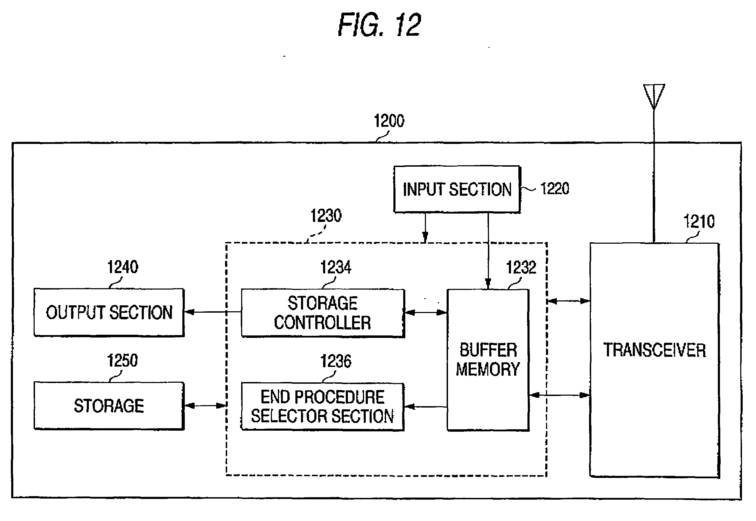

Fig. 12 is a block diagram showing a portable information terminal according to the third embodiment of the invention. The portable information terminal 1200 of this embodiment comprises a transceiver 1212 for performing voice/data transmission and reception, an input section 1220 for accepting an instruction of the user, a controller 1230 for controlling various features of the portable information terminal 1200, an output section 1240 for outputting data based on the control in the controller 1230, and a storage 1250 for storing file history on an access to a file (corresponding to history information in the aspects of the invention). Files may be stored in the storage 1250 or in an external auxiliary storage (not shown).

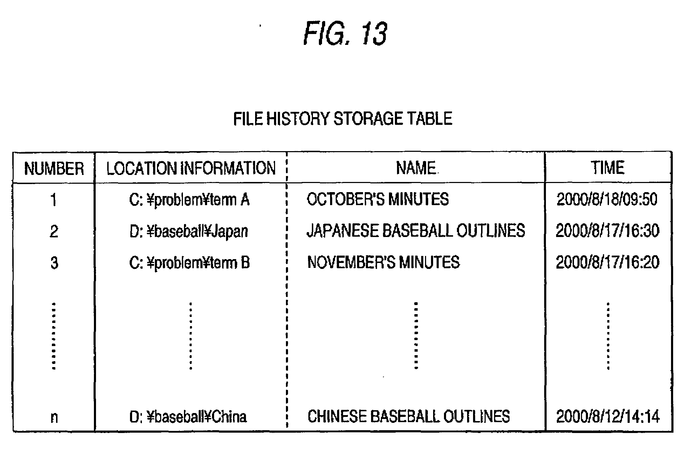

The storage 1250 is implemented via for example internal storage including volatile and non-volatile semiconductor memories such as RAM, ROM, EEPROM, and flash memory, or external storage including a PC card of the storage system for portable information apparatus. In a predetermined area of the storage 1250 is stored a file history storage table as shown in Fig. 13. Fig. 13 is an explanatory drawing illustrating a file history storage table stored in a predetermined area of the storage 1250.

As shown in Fig. 13, the file history storage table stores file location information, file name and file access time and date as file history. The user makes an access while identifying the file name. The user can obtain location information on the file from the file management function of OS, so that these file names and locations are used in this embodiment. Data of the time and date of a file access is determined by a clock feature in the portable information terminal 1200.

The controller 1230 is implemented via a MPU (microprocessor) and DSP (digital signal processor), The controller 1230 comprises at least a buffer memory 1232 for temporarily saving file history at a file access. The controller 1230 further comprises a storage controller 1234 for setting whether to store file history temporarily saved in the buffer memory 1232 into the storage 1250 to end the processing, as a feature implemented by processing programs. The input section 1220 is implemented via a ten-key pad, scroll keys and a microphone. The output section 1240 is implemented for example via an LCD panel and a loudspeaker.

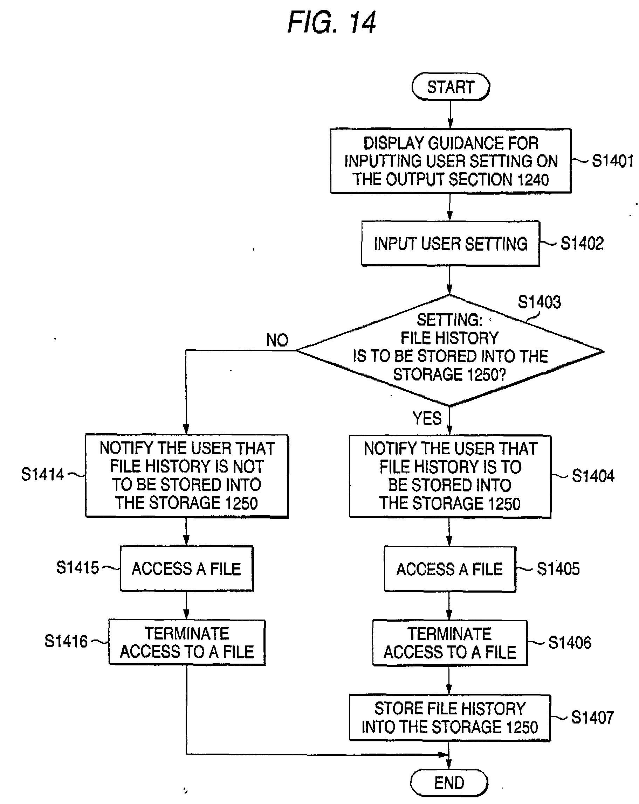

Processing in a portable information terminal according to the embodiments as comprising the aforementioned configuration will be detailed referring to Fig. 14, Fig. 15 and Fig. 16 respectively in the order of (First example), (Second example) and (Third example).

### (First example)

The first example of the processing in a portable information terminal according to the embodiment will be described referring to Fig. 14. In this example, the user sets whether to store file access history into the storage 1250 and access history is stored into the access history storage table of the storage 1250 via the storage controller 134 only when setting is made to store access history after termination of the access. Fig. 14 is a flowchart explaining the first example of the processing in a portable information terminal according to the embodiment.

In steps S1401 and S1402, to set whether to store access history temporarily saved in the buffer memory 1232 at a file access into the file access storage table of the storage 1250, the user enters an instruction to the storage controller 1234 of the controller 1230 via the input section 1220 before file access. More particularly, a message such as "Do you wish to store history information?", "#1: Yes", and "#2: No" is displayed as a guidance on the LCD panel of the output section 1240 to prompt an input from the user, for example before a file access. The user presses an appropriate key ("#1" or "#2") in accordance with this guidance message to make proper setting.

Next, in case setting is made to store the access history before a file access in decision step S1403, execution proceeds to step S1404. In step S1404, the user is notified via the output section 1240 that setting is made to store the access history of a file into the storage 1250. User notification via the output section 1240 uses an image or a text on an LCD display panel, a warning tone via a loudspeaker, a light via an LED or laser diode, or vibration via a motor. This allows checkup of whether the user currently selects to store access history. In step S1405, the user displays a file management screen via keys on an LCD display panel, selects a desired file and starts to access the file. In this practice, the data including the location information, name of the file and time and date is written into the buffer memory 1232. The location information is to uniquely identify the file stored in the storage 1250. The name is assigned to the file. The data of time and date is obtained by a clock feature owned by the portable information terminal. When file access is terminated in step S1406, access history of a file temporarily saved in the buffer memory 1232 is stored into the access history storage table of the storage 1250 in step S1407.

Next, in case setting is made not to store the access history of a file in decision step S1403, execution proceeds to step S1414. In step S1414, the user is notified via the output section 1240 that setting is made not to store the access history of a file in the storage 1250. Next, in step S1415, the user displays a file management screen on an LCD display panel, selects a desired file and starts to access the file. In this practice, the data including the location information, name of the without transferring the contents of the buffer memory 1232 to the storage 1250, so that the file access history is not stored into the storage 1250.

### (Second example)

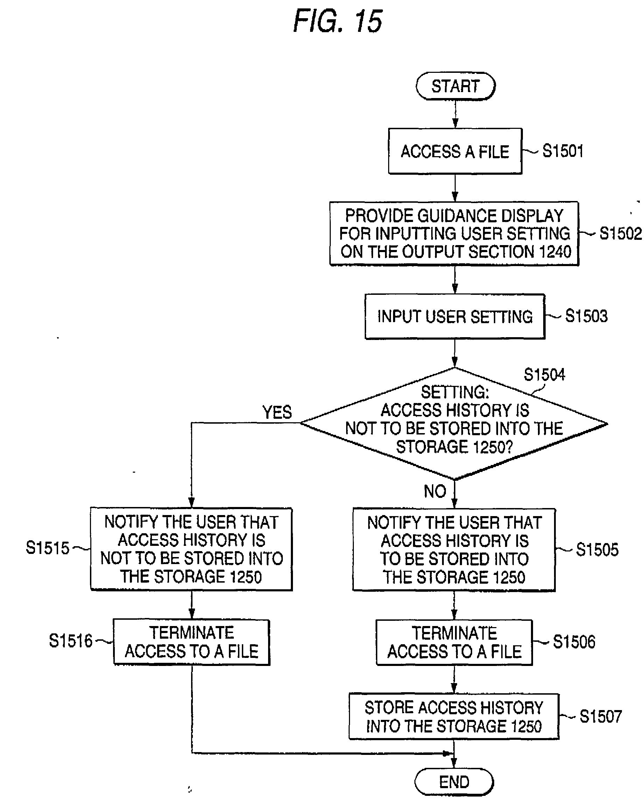

The second example of the processing in a portable information terminal according to the embodiment will be described referring to Fig. 15. In this example, the user sets whether to store access history of a file into the storage 1250 and access history is stored into the storage 1250 via the storage controller 1234 only when setting is made to store access history. Fig. 15 is a flowchart explaining the second example of the processing in a portable information terminal according to the embodiment.

In step S1501, for example, the user displays a file management screen on an LCD display panel, selects a desired file and starts to access the file. In this practice, same as the first embodiment, the data including the location information, name of the file and time and date is temporarily saved into the buffer memory 1232. In steps S1502 and S1503, to set whether to store access history temporarily saved in the buffer memory 1232 at a file access into the access history storage table of the storage 1250, the user enters an instruction to the storage controller 1234 of the controller 1230 via the input section 1220. More particularly, a message such as "Do you wish to store file history?", "#1: Yes", and "#2: No" is displayed as a guidance on the LCD display panel of the output section 1240 to prompt an input from the user, for example while the user is accessing a file. The user presses an appropriate key ("#1" or "#2") in accordance with this guidance message to make proper setting.

Next, in case setting is made to store the access history of a file during a file access in decision step S1505, execution proceeds to step S1505. In step S1505, the user is notified via the output section 1240 that setting is made to store the access history of a file into the storage 1250. Same as the first example, user notification uses an image on an LCD panel, a warning tone via a loudspeaker, a light via an LED or laser diode, or vibration via amotor. Access to the file is terminated in step S1506, then the access history of the file temporarily saved in the buffer memory 1232 is stored in the access history storage table of the storage 1250 in step S1507.

Next, in case setting is made not to store the access history of a file during a file access in decision step S1505, execution proceeds to step S1515. In step S1515, the user is notified via the output section 1240 that setting is made not to store the access history of a file into the storage 1250. In step S1516, access to the file is terminated without transferring the contents of the buffer memory 1232 to the storage 1250, so that the access history is not stored into the storage 1250.

As described earlier, according to a portable information terminal and the first example and the second example of a communications method of this embodiment, selection is made whether to store access history at a file access into the storage 1250 via the storage controller 1234 (storage control step) based on the user's instruction via the input section 1220 before or during an access to a file stored in the storage 1250 or an external auxiliary storage. Next, the portable information terminal and the communications method store access history at a file access via the storage 1250 (storing step) based on the setting via the storage controller 1234 (storage control step).

In this way, it is possible to save the user the work of deleting access history in the storage 1250 the user wishes to keep secret after a file access.

It is also possible to prevent access history to be kept secret from being left undeleted because a predetermined period has elapsed since the end of file access due to an unexpected situation such as a sudden visitor following the file access.

Similarly, it is possible to save the user the work of retrieving before deleting the corresponding access history in the access history stored in the storage 1250 in case an access is made to another file within a predetermined period after the file access.

In case the user deletes access history stored in the storage which the user wishes to keep secret after a file access, the third party may assume that the data has been deleted. By using a setting whereby access history is not stored into the storage 1250 before or during a file access, the third party cannot assume that the data has been deleted.

### (Third example)

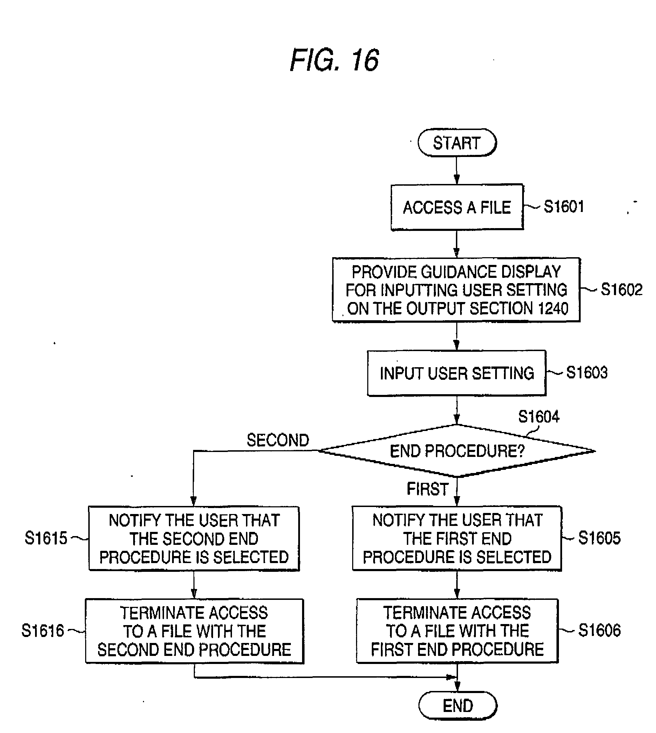

The third example of the processing in a portable information terminal according to the embodiment will be described referring to Fig. 16. In this example, the user selects and sets an end procedure and access history of a file is stored into the storage 1250 via the end procedure selector section 1236 only when the second end procedure for ending the processing while storing access history is selected. Fig. 16 is a flowchart explaining the third example of the processing in a portable information terminal according to the embodiment.

In step S1601, for example, the user displays a file management screen on an LCD display panel, selects a desired file and starts to access the file. In this practice, same as the first embodiment, the data including the location information, name of the file and time and date of browsing is temporarily saved into the buffer memory 1232. In steps S1602 and S1603, to select the first end procedure for ending the processing without storing the access history of a file or the second end procedure for ending the processing while storing the access history of a file as an end procedure, the user enters an instruction to the end procedure selector section 1236 of the controller 1230 via the input section 1220 when file access is terminated. More particularly, a message such as "Do you wish to end the processing with the first end procedure or second end procedure?", "#+End key: First end procedure", and "End key: Second end procedure" is displayed as a guidance on the LCD display panel of the output section 1240 to prompt an input from the user. The user presses an appropriate key ("#+End key" or "End key") in accordance with this guidance message to make proper setting.

Next, in case the first end procedure for ending the processing without storing the access history of a file is selected at the end of file access in decision step S1604, execution proceeds to step S1605. In step S1605, the user is notified via the output section 1240 that the first end procedure is selected. User notification via the output section 1240 is the same as that in the first example. Via such a user notification, it is possible to check which of the first end procedure or second end procedure the user currently selects. Then, in step S1606, the access to the file is terminated with the first end procedure for ending the processing without transferring the access history of a file temporarily saved in the buffer memory 1332 to the access history storage table of the storage 1250. As a result, procedure ends without storing the access history of a file into the storage 1250.

In case the second end procedure for ending the processing while storing the access history of a file is selected at the end of file access in decision step S1604, execution proceeds to step S1615. In step S1615, the user is notified via the output section 1240 that the second end procedure is selected. Then, in step S1616, the access is terminated with the second end procedure for ending the processing while transferring the access history of a file temporarily saved in the buffer memory 1332 to the access history storage table of the storage 1250.

While this example covers only the case where the user selects the first end procedure or second end procedure when file access is terminated, the user may select the first end procedure or second end procedure by pressing defined key(s) other than the End key before or during a file access.

As described earlier, according to a portable information terminal and the third example of a communications method of this embodiment, the first end procedure or second end procedure is selected via the end procedure selector section 1236 (end procedure selecting step) based on the user's instruction via the input section 1220. Next, the portable information terminal and the communications method end the processing without storing access history into the storage 1250 (in storing step) when the first end procedure is selected, and end the processing while storing access history into the storage 1250 (in storing step) when the second end procedure is selected.

Via this configuration, it is possible to end the processing without storing access history into the storage 1250 with a single action, by selecting the first end procedure at the end of a file access.

It is also possible to save the user the work of deleting access history stored in the storage 1250 which the user wishes to keep secret after the end of a file access.

In case the user wishes to store the access history of a file into the storage 1250, the user may select the second end procedure after the end of a file access to attain the object.

### (Variation)

A portable information terminal and a communications method according to the invention is applicable to history information concerning transmission/reception of e-mails, that is, information such as a mail address used to transmit an e-mail or obtained when an e-mail is received, name, and time and date. In this case, history information of an e-mail replaces the history information at the outgoing call or history information at the incoming call in the first embodiment. While the configuration of a portable information terminal and a communications method are the same as those in the first embodiment, the portable information terminal is applied to a communications system (Fig. 7) described in the second embodiment.

As mentioned earlier, according to a portable information terminal, a communications method and a recording medium of the invention, selection is made on whether to store history information at an outgoing call or history information at an incoming call into storage unit via storage control unit (a storage control step) based on the user's instruction via input unit before or during communications. Then history information at the outgoing call or history information at the incoming call is stored via storage unit (a storing step) based on the setting via storage control unit (a storage control step) . For example, setting is made not to store history information into storage unit before or during communications. Via this, it is possible to save the user the work of deleting history information stored in the storage unit which the user wishes to keep secret after communications are over.

It is further possible to prevent history information to be kept secret from being left undeleted because a predetermined period has elapsed since the end of communications due to an unexpected situation such as a sudden visitor following the communication and successive incoming calls.

Similarly, it is possible to save the user the work of retrieving before deleting the corresponding history information in the history information stored in the storage unit in case other history information is stored into storage unit within a predetermined period after the end of communications.

According to the invention, selection is made on whether to store history information obtained when browsing the provided information into storage unit via storage control unit (a storage control step) based on the user's instruction via input unit before or during communications. Then history information obtained when browsing the provided information is stored via storage unit (a storing step) based on the setting via storage control unit (a storage control step). For example, setting is made not to store history information obtained when browsing the provided information into storage unit before or during communications. Via this, it is possible to save the user the work of deleting history information which the user wishes to keep secret after communications are over.

It is further possible to prevent history information to be kept secret from being left undeleted because a predetermined period has elapsed since the end of communications due to an unexpected situation such as a sudden visitor following the communication and successive incoming calls.

Moreover, it is possible to save the user the work of retrieving before deleting the corresponding history information in the history information stored in the storage unit in case other provided information is browsed and other history information is stored into storage unit within a predetermined period after the end of communications.

According to the invention, selection is made on whether to store history information at a file access into storage unit via storage control unit (a storage control step) based on the user's instruction via input unit before or during an access. Then history information at a file access is stored via storage unit (a storing step) based on the setting via storage control unit (a storage control step). For example, setting is made not to store history information at a file access into storage unit before or during a file access. Via this, it is possible to save the user the work of deleting history information which the user wishes to keep secret after a file access.

It is further possible to prevent history information to be kept secret from being left undeleted because a predetermined period has elapsed since the end of communications due to an unexpected situation such as a sudden visitor following the communication and successive incoming calls.

Moreover, it is possible to save the user the work of retrieving before deleting the corresponding history information in the history information stored in the storage unit in case an access is made to another file and history information of the file is stored into storage unit within a predetermined period after the end of a file access.

According to the invention, the first end procedure or second end procedure is selected via end procedure selection unit (an end procedure selecting step) based on the user's instruction via the input section. The processing is ended without storing history information into the storage unit (in storing step) when the first end procedure is selected, and the processing is ended while storing history information into the storage unit (in storing step) when the second end procedure is selected. For example, it is possible to end the processing without storing history information into the storage unit with a single action, by selecting the first end procedure at the end of communications. Thus, it is possible to save the user the work of deleting history information stored in the storage unit which the user wishes to keep secret after the end of communications.

In case the user wishes to store the history information of a distant party into the storage unit, the user may select the second end procedure after the end of communications to attain the object.

## Claims

1. A portable information terminal comprising:
an input unit for inputting an instruction from a user;
a storage unit for storing history information including at least one of history information at an outgoing call and history information at an incoming call; and
a storage control unit for selecting whether to store the history information into the storage unit based on the user's instruction via the input unit before or during communications.

2. A portable information terminal according to claim 1, further comprising an output unit for outputting the result of selection via the storage control unit.

3. A portable information terminal that allows browsing of the provided information stored in information provision apparatus connected via a network, comprising:
an input unit for inputting an instruction from a user;
a storage unit for storing history information; and
a storage control unit for selecting whether to store history information at browsing of provided information into the storage unit based on the user's instruction via the input unit before or during communications.

4. A portable information terminal according to claim 3, further comprising an output unit for outputting the result of selection via the storage control unit.

5. A portable information terminal that allows an access to file storage unit where various files are stored, comprising:
an input unit for inputting an instruction from a user;
a storage unit for storing history information; and
a storage control unit for selecting whether to store history information at an access into the storage unit based on the user's instruction via the input unit before or during an access.

6. A portable information terminal according to claim 5, further comprising an output unit for outputting the result of selection via the storage control unit.

7. A portable information terminal comprising:
an input unit for inputting an instruction from a user;
a storage unit for storing history information; and
an end procedure selection unit for selecting one of a first end procedure and a second end procedure based on the user's instruction via the input unit,
wherein a communication is terminated without storing the history information into the storage unit when the first end procedure is selected,
wherein a communication is terminated with storing the history information into the storage unit when the second end procedure is selected.

8. A portable information terminal according to claim 7, further comprising an output unit for outputting the result of selection via the storage control unit.

9. A portable information terminal that allows browsing of the provided information stored in information provision apparatus connected via a network, comprising:
an input unit for inputting an instruction from a user;
a storage unit for storing history information and
an end procedure selection unit for selecting one of a first end procedure and a second end procedure based on the user's instruction via the input unit,
wherein the browse is terminated without storing the history information into the storage unit when the first end procedure is selected,
wherein the browse is terminated with storing the history information into the storage unit when the second end procedure is selected.

10. Aportable information terminal according to claim 9, further comprising an output unit for outputting the result of selection via the storage control unit.

11. A portable information terminal that allows an access to file storage unit where various files are stored, comprising:
an input unit for inputting an instruction from a user;
a storage unit for storing history information and;
an end procedure selection unit for selecting one of a first end procedure and a second end procedure based on the user's instruction via the input unit,
wherein an access to the file is terminatedwithout storing the history information into the storage unit when the first end procedure is selected,
wherein an access to the file is terminated with storing the history information into the storage unit when the second end procedure is selected.

12. A portable information terminal according to claim 11, further comprising an output unit for outputting the result of selection via the storage control unit.

13. A communications method comprising:
a storage control step of selecting whether to store history information including at least one of history information at an outgoing call and history information at an incoming call into the storage unit based on the user's instruction before or during communications; and
a storing step of storing history information into storage unit when storing the history information is selected in the storage control step.

14. A communications method according to claim 13, further comprising an output step of outputting the result of selection via the storage control step.

15. A communications method for a portable information terminal that allows browsing of the provided information stored in information provision apparatus connected via a network, comprising:
a storage control step of selecting whether to store history information at browsing of provided information into the storage unit based on the user's instruction before or during communications; and
a storing step of storing history information into storage unit when storing the history information is selected in the storage control step.

16. A communications method according to claim 15, further comprising an output step of outputting the result of selection via the storage control step.

17. A communications method for a portable information terminal that allows an access to file storage unit where various files are stored, comprising:
a storage control stop of selecting whether to store history information at an access into the storage unit based on the user's instruction before or during an access; and
a storing step of storing history information into storage unit when storing the history information is selected in the storage control step.

18. A communications method according to claim 17, further comprising an output step of outputting the result of selection via the storage control step.

19. A communications method comprising:
a starting step of starting a communication;
an end procedure selecting step of selecting one of a first end procedure and a second end procedure based on the user's instruction; and
an termination step of terminating a communication without storing the history information into the storage unit when the first end procedure is selected, and of terminating a communication with storing the history information into the storage unit when the second end procedure is selected.

20. A communications method according to claim 19, further comprising an output step of outputting the result of selection via the storage control step.

21. A communications method for a portable information terminal that allows browsing of a provided information stored in information provision apparatus connected via a network, comprising:
a starting step of starting to browse the information stored in the information provision apparatus;
an end procedure selecting step of selecting a first end procedure or a second end procedure based on the user's instruction; and
an termination step of terminating the browse without storing the history information into the storage unit when the first end procedure is selected, and of terminating the browse with storing the history information into the storage unit when the second end procedure is selected.

22. A communications method according to claim 21, further comprising an output step of outputting the result of selection via the storage control step.

23. A communications method for a portable information terminal that allows an access to file storage unit where various files are stored, comprising:
a starting step of starting to access the file;
an end procedure selecting step of selecting a first end procedure or a second end procedure based on the user's instruction; and
an termination step of terminating the access without storing the history information into the storage unit when the first end procedure is selected, and of terminating the access with storing the history information into the storage unit when the second end procedure is selected.

24. A communications method according to claim 23, further comprising an output step of outputting the result of selection via the storage control step.

25. A computer-readable recording medium that records a communications method comprising:
a storage control step of selecting whether to store history information including at least one of history information at an outgoing call and history information at an incoming call into the storage unit based on the user's instruction before or during communications; and
a storing step of storing history information into storage unit when storing the history information is selected in the storage control step.
